# EUROPEAN PATENT APPLICATION

(11) **EP 1 626 568 A1**
(43) Date of publication of application: **15.02.2006**
(21) Application number: 04019219.7
(22) Date of filing: 12.08.2004
(51) Int. Cl.: H04N 1/60

(54) **Color and density calibration of color printers, halftone super-cell optimization for artifact reduction, and printer profile mapping of input primaries to output primaries**

(71) Applicant: Toshiba Corporation, Mishima-shi, Shizuoka 411-8520 (JP); Toshiba Tec Kabushiki Kaisha, Shizuoka-ken, Shizuoka 411-8520 (JP)
(72) Inventor: Kress, William C., Vista CA 92081 (US)
(74) Representative: Kramer - Barske - Schmidtchen

(57) **Abstract**

A method for performing visual calibrations on a color printer. For calibrating relative intensities of colors, a predetermined image is printed by an image output apparatus. A user then selects a bias color and an intensity from a reference. The image output apparatus then adjusts its print engine based on the selection. For density calibration an image is printed, preferably once with a light background, and once with a dark background. The user then selects an adjustment after visually comparing the printed image with a reference image and adjusts the printer by noting whether details are missing from the printed image on the light background image or the dark background image.

A method for printing outside the gamut by anticipating where monitor primaries will map and the placement of desired printer primaries at that place. A relationship is established between a printer (B2Ax) profile that anticipates the input (A2Bx) profile and maps them in a simplistic manner. The mapping is used to create an output ICC profile (B2Ax) mapping that includes mappings for colors out of the gamut. First, the most important color mappings (RGBCMY, etc.) are established and these mappings are then used to determine the outside the gamut properties of the ICC output transform. The inside the gamut transforms remain the same as classic rendering. Another aspect of the present invention is to make run-time changes to the printer profile to map the image input primaries to optimal output primaries, thus enabling a printer to be mapped for several different types of monitors or input primaries.

Artifact reduction is achieved by altering the growth of sub-cells for each super-cell in either a pre-determined or random manner. The means of alteration is selected such that the sum of all the groups equals a halftone value. In another embodiment, the random group is selected by using predetermined patterns which are different among sub-cells, such as different means of constructing a dot. Preferably a different pattern is used in adjacent super-cells. In yet another embodiment, the method selects sub-cells patterns that are not aligned on the super-cell boundaries.

## Description

### BACKGROUND OF THE INVENTION

The present invention relates generally to image output devices and more specifically related to color calibration and density calibration of color printers, to mapping input primaries that are outside the scope of the image output device's ability to reproduce, and to reducing engine and halftoning artifacts.

Image output apparatuses such as printers, faxes, copy machines, or multifunction peripherals which may include some or all of the aforementioned devices and even other types of image producing devices are used to produce images based on an input. Color image output devices typically produce color images by mixing together primary colors. If the color to be output matches one of the primary colors, then only that color is used. However, most colors require a combination of the primary colors. The image output device's engine determines an amount of the primary colors to mix.

A problem with color devices is that there can be variations in the output produced by the primary colors. The colors can become unbalanced creating relative differences between the primary colors, thus mixing the color causes unacceptable tints in the output image. The relative differences in colors can be caused by a variety of factors, including but not limited to, aging of various components, temperature and humidity changes, and changes between batches of inks used to create the image.

Although image output engines attempt to monitor and keep the relative densities of the color outputs the same, these methods are typically not 100% effective. Thus, the need exists for a method wherein a user can visually calibrate the image output device.

Another common and similar problem with image output apparatuses such as printers is balancing the lightness-darkness sum of marking channels. This can cause images produced by the apparatus to be too dark or too light and details in the image can be obscured.

Although image output engines attempt to monitor and keep the relative light-dark densities the same, these methods are typically not 100% effective. Thus, the need exists for a method wherein a user can visually calibrate the relative light-dark density of an image output device.

Of additional relevance to the present invention, the International Color Consortium (ICC) defines device profiles to provide color management systems with the information necessary to convert color data between native device color spaces and device independent color spaces. The specification divides color devices into three broad classifications: input devices, display devices and output devices. For each device class, a series of base algorithmic models are described which perform the transformation between color spaces. These models provide a range of color quality and performance results, which provide different trade-offs in memory footprint, performance and image quality.

In general, actual device color gamuts (the range of all possible colors which can be represented or produced on the device) may not be large enough to reproduce the desired color appearances communicated by the PCS values. Four rendering intents (gamut mapping styles) are defined by the ICC in order to address this problem. Each one represents a different compromise. The colorimetric rendering intents enable within gamut colors to be reproduced accurately (though possibly with compensation for the whiteness of the media) at the expense of out-of-gamut colors. Compensation can be made for chromatic adaptation when the viewing condition assumed is different to the reference viewing environment. The other rendering intents modify the colorimetric values as-needed to account for any differences between devices, media, and viewing conditions.

One shortcoming of ICC specification is the specification of how source colors outside the destination color gamut should be mapped. This is particularly problematic when mapping input primaries, such as monitors, digital cameras or scanners to output devices such as printers.

For example, one problem is to map monitor primaries to desired printer output. It is not a simple task to match monitor primaries with printer primaries because the monitor Red-Green-Blue (RGB) primaries are quite far outside the printer gamut because the printer gamut.

Thus a need exists for a method to map image input devices to image output devices when the input devices have primaries outside the gamut of the output device. Furthermore, because it is often desired to share image output devices amongst a plurality of image input devices, wherein the image input devices may have different primaries, it is also desired that the image output device have the capability to map image input primaries from a plurality of different image input devices.

Of additional relevance to the present invention, image output systems such as printer, copiers, facsimile machines receive an input and generate an image based on the received input. Often the input has several shades or various degrees of toning, and the image output device tries to imitate the shade or tone while using inks or other media which are much darker than the desired shade by printing on a sheet of paper that is much lighter than the desired shade. One method for obtaining the desired shade is halftoning. Halftoning is the reproduction of grayscale images using dots of a single shade, but varying their size to simulate the different sizes of grey. Laser printers that cannot print different sized dots produce halftones by varying the number of dots in a given area. Halftoning is also used to produce a black and white version of a color document using shades of gray in place of the original colors.

Simple halftoning methods that are well known in the art can have problems with artifacts, which are manifested as undesirable macro effects. For example, a monochrome default halftoning pattern for a 16 x 16 cell that has 8 sub-cells can provide the illusion of continuous tone from paper white to device black. If all of the 8 sub-cells grow the same so the code-values for all sub-cells are identical macro effect of equal dot growth can produce horizontal, vertical, slanted line artifacts or repeated pattern artifacts. Halftoning methods which use patterns, often in conjunction with code-values may still exhibit macro effects because of the continuous repetition of the same pattern.

Thus, a need exists for a halftoning method that eliminates line patterns or any other artifact patterns or other macro effects.

### BRIEF SUMMARY OF THE INVENTION

In view of the aforementioned needs for color calibration, the present invention contemplates a method that uses a color sensitive image and provides a reference for a user to compare with the color sensitive image.

One aspect of the invention is for a method for visually calibrating a color printer, comprising the steps of providing an interface for receiving commands, providing a color reference, the reference comprising a plurality of colors, outputting a predetermined image, visually comparing the predetermined image with the reference, receiving a bias color selection, and adjusting the printer engine based on the received bias color. In addition to selecting a color, the reference may provide a plurality of intensities for each color. The interface may be a control panel interface on the image output device, or the interface can be implemented by a printer driver on a remote computer communicatively coupled to the color printer. When a printer driver is used on a remote computer, the color reference can be displayed on a monitor coupled to the remote computer. Other aspects of the present invention include an image output apparatus and a computer readable medium of instructions with means for implementing the aforementioned method.

In view of the aforementioned needs for light-dark density calibration, the present invention contemplates a method that uses an image that is sensitive to light-dark errors. The image contains important details in the highlight and shadow regions of usage, which when missing

One aspect of the present invention is a method for determining that an image output device is in an acceptable density range, the image output device having an image output engine, comprising the steps of outputting a predetermined image, visually comparing the predetermined image with a reference, selecting an adjustment parameter; and adjusting the image output engine based on the adjustment parameter. Preferably the reference comprises a plurality of images, each image having a different background. Normally, an image is shown once with a dark background and again with a light background. By determining whether there are details missing, and from which background, a user can adjust the printer. When all of the details of the image are visible, then the printer has an optimal light-dark balance. An interface is used for commanding the image output device to print the predetermined image and to input the adjustment parameter. The interface may be either a control panel on the image output device, or a printer driver running on a remote computer communicatively coupled to the image output device. Normally, the adjustment parameter is selected from the group consisting of lighten, darken and no adjustment. It is further contemplated that the reference or the adjustment parameters can be a group with various shades of lightness or darkness.

Other aspects of the present invention include an image output apparatus and a computer readable medium of instructions with means for implementing the aforementioned method.

The present invention additionally contemplates using a transformation table wherein standard rendering is used for colors inside the gamut, and colors outside the gamut or mapped to a placement of desired printer primaries. The relationship is established by experimentally determining the desired relationship between an input primary and an output primary and mapping the input primary to the desired output primary. Then an output of gamut primary is mapped to a placement of desired printer primaries. The mappings may then be used to create a transformation table.

After the transformation table is established, when the image output device receives an image input from an image input device, which comprises colors inside the gamut and outside the gamut, the image output is created by converting the image colors to output colors via the transformation table.

Another aspect of the invention contemplates using a plurality of transformation tables wherein each transformation table is mapped to an image input profile. This enables the image output device to support a plurality of image input profiles. Then when the image output device receives an image, the proper profile for the image input is determined and the appropriate transformation table is selected for converting the input image.

The present invention further contemplates an apparatus and computer readable medium for performing the aforementioned methods.

Another aspect of the invention contemplates a method that within a super-cell, the sub-cell growth is randomized. For example, if a 50 percent halftone is desired, one sub-cell may have 50 percent of its cells grown, the next sub-cell may have 48 percent of its sub-cells grown, and the next super-cell may have 52 percent of the sub-cells grown. Thus the average value of the super-cells if 50 percent.

In another embodiment of the present invention, sub-cells are selected into groupings such that the groupings cross the boundaries of the super-cells. The sub-cells within each group are then grown either by using a random bias value for each grouping, or using predetermined biases for each grouping. The groupings may also vary in size. For example one grouping may contain 64 sub-cells while another grouping only has 16. By using groupings that are not aligned on super-cell boundaries, one part of a super-cell may be increasing in growth while the other part of the super-cell is decreasing in growth with a net result of increasing density.

As those skilled in the art can readily appreciate, the present invention may be implemented in software, hardware or a combination thereof. While the description herein is directed to black and white image or grayscale images, the present invention is equally adaptable to color printers.

Still other advantages, objects and features of the present invention will become readily apparent to those skilled in this art from the following description wherein there is shown and described a preferred embodiment of this invention, simply by way of illustration of one of the best modes best suited for to carry out the invention. As it will be realized, the invention is capable of other different embodiments and its several details are capable of modifications in various obvious aspects all without from the invention. Accordingly, the drawing and descriptions will be regarded as illustrative in nature and not as restrictive.

### BRIEF DESCRIPTION OF THE SEVERAL VIEWS OF THE DRAWING

The accompanying drawings incorporated in and forming a part of the specification, illustrates several aspects of the present invention, and together with the description serve to explain the principles of the invention. In the drawings:
FIG 1 is an illustration showing an example reference image for use with color calibration along with bias colors and intensities;
FIG 2 is a block diagram of steps contemplated by a preferred embodiment of the present invention;
FIG 3 is an illustration showing an example reference image for lightness-darkness density calibration;
FIG 4 is a block diagram of steps contemplated by a method of the preferred embodiment of the present invention for lightness-darkness density calibration;
FIG 5 is a block diagram illustrating a simple connection between a monitor and a printer;
FIG 6 is a block diagram of an embodiment of the present invention wherein primaries from a single image input device is mapped to an image output device;
FIG 7 is a block diagram of an embodiment of the present invention wherein the image output device is capable of translating primaries from a plurality of different image input devices;
FIG 8 is an example of a super-cell grid composed of sixteen sub-cells;
FIG 9 is an example of four super-cells, each super-cell with sixteen sub-cells;
FIG 10 is a graph illustrating an example of output sub-cell growth based on input;
FIG 11 is an embodiment wherein sub-cells groupings are made that cross super-cell boundaries;
FIG 12 is an example of a super-cell grid with random sub-cells biased in each super-cell; and
FIG 13 is an example of a super-cell grid using a combination of random patterns and a random code-value for each super-cell.

### DETAILED DESCRIPTION OF INVENTION

Throughout this description, the preferred embodiment and examples shown should be considered as exemplars, rather than limitations, of the present invention.

One aspect of the present invention is directed to a method for performing visual calibration for balancing the colors of a color printer. The method comprises printing a composite that is very sensitive to relative intensities of the color channels used by the printer, which are normally cyan, magenta, yellow. A user compares the composite to a reference image and looks for any tints or hues on the composite that are abnormal to the reference image. The user then inputs a bias color to indicate the color that appears on the composite. The image output apparatus then performs internal adjustments based on the input bias color.

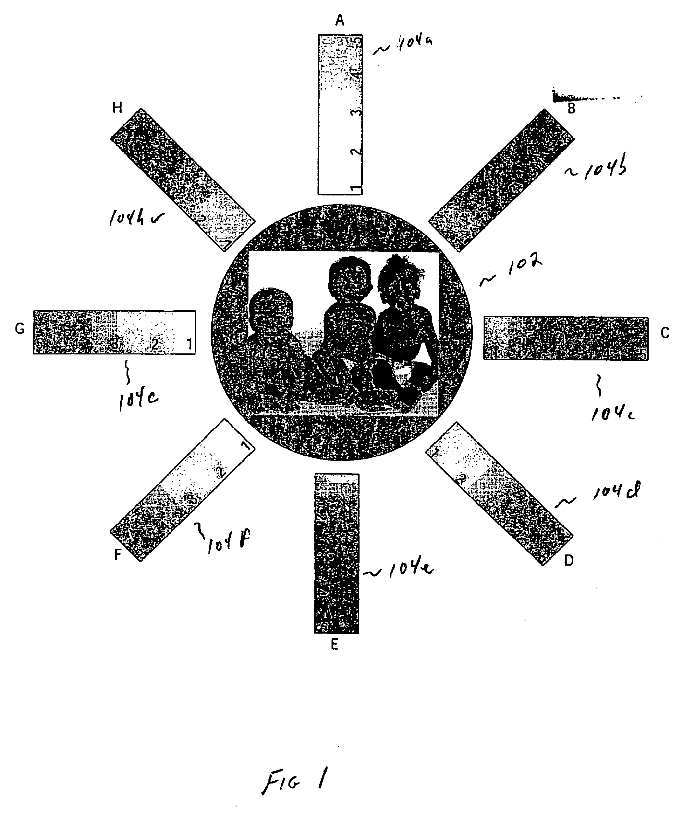

Referring to FIG 1 there is shown an example reference image 102 and bias color bars A 104a, B 104b, C 104c, D 104d, E 104e, F 104f, H 104g and G 104h. As shown in FIG 1, color bar A 104a is yellow, color bar B 104b is orange, color bar C 104c is red, color bar D 104d is magenta, color bar E 104e is violet, color bar F 104f is blue, color bar G 104g is blue-green and color bar H 104h is green. Each of the aforementioned color bars has various intensities, numbered 1-5 where 5 represents the darkest intensity for the color and 1 the lightest.

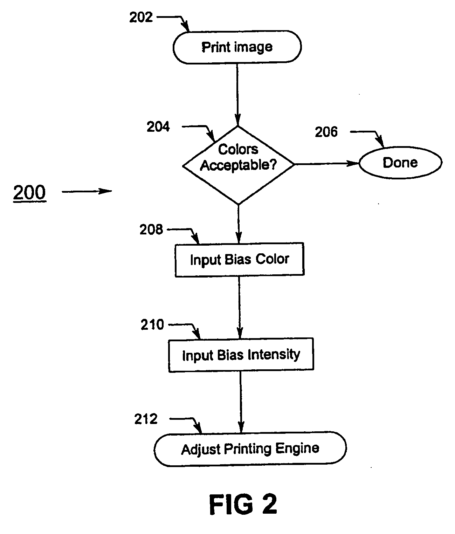

Referring now to FIG 2 with continued reference to FIG 1, there is illustrated a method 200 of the preferred embodiment. The method begins at step 202 by printing a predetermined image (not shown), which should match the reference image 102. Preferably, the image is sensitive to relative intensities of the color channels used by the printer, normally cyan, magenta and yellow. The predetermined image is then visually compared to the reference image 102 as shown in step 204. If the user notices a tint or hue on the predetermined image, the user then selects a bias color, and intensity to match the tint or hue observed on the predetermined image. The user then inputs the bias color as shown in step 208 and intensity as shown in step 210 into the image output apparatus which then, as shown in step 212, adjusts its print engine accordingly. Using the example of Figure 1, if the user notices a medium magenta tint in the predetermined image, the user would select color bar D 104d, intensity level 3. It is also possible that more than one adjustment may be needed, therefore the process may be repeated as often as necessary.

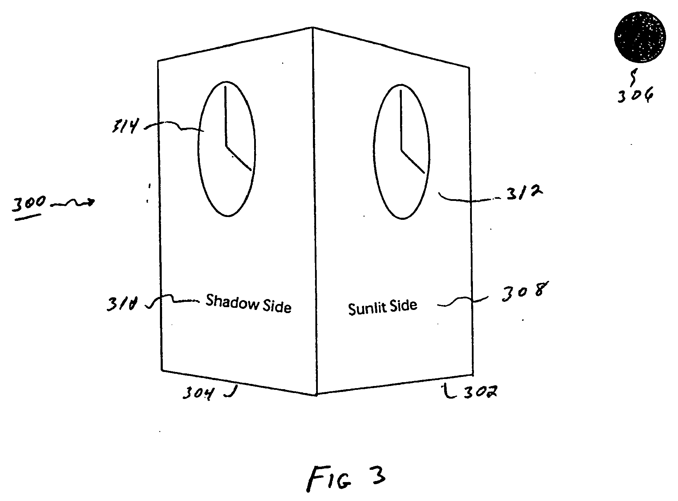

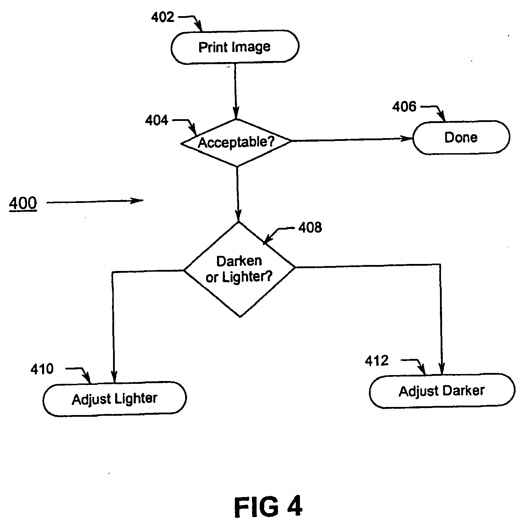

Referring now to FIGs 3 and 4 there is shown a reference 300 and method 400 for light-dark calibration of a color printer. As shown in FIG 3, the reference 300 comprises a sunlit side 302 and a shadow side 304. A sun icon 306 can be used to indicate which side is the sunlit side 302. The sides may also be labeled such as sunlit side 308 and shadow side 310. As shown in FIG 3, the image comprises a circle with two lines 312 similar to a clock at the 4 o'clock position on the sunlit side 302, and another circle with two lines 314 on the shadow side 304. The reference 300 should be an image that is sensitive to light-dark errors. Important details, such as the circles 312 and 314, are in the sunlit side 302 and shadow side 304. The user by comparing a print out from an image apparatus with the reference 300 can determine if detail is missing, and from which side.

The reference in FIG 3 shows the ideal output. However, it is also contemplated that the reference 300 may also have several other images with details missing on either the sunlit side 302 or the shadow side 304 so that the user can select a drawing most resembling the output for faster adjustments.

The method 400 begins at step 402 by printing an image from the image output device. At step 404 the user compares the image with the reference 300. If the image is acceptable then the process is done as shown in step 406. Otherwise, processing continues to step 408 where the user determines if the image is lighter or darker than the reference 300. If the image is lighter then as shown at step 410 the image output device is adjusted lighter, if the image is darker that the reference 300 then the image output device is adjusted darker as shown in step 412. The process may be repeated as often as necessary.

Both the aforementioned color calibration method 200 and light-dark density calibration method 400 can be performed either at the control panel of the image output device or by using a printer driver on a remote computer communicatively coupled to the output device. When using a printer driver, the desired reference image may be displayed on a video monitor coupled to the remote computer. The commands to print an image would be sent and inputting of the adjustment parameters may be also be performed either at the control panel or via the printer driver. Once the appropriate bias or intensity adjustment is made, then the image output apparatus uses the adjustment parameters to adjust the output of the device.

Another aspect of the present invention contemplates the construction of profiles so that mapping of monitor primaries to desired printer output is optimized.

One aspect of the present invention is directed to printing outside the gamut by anticipating where monitor primaries will map and the placement of desired printer primaries at that place. There are a small number of frequently used monitor primaries, such as RGB, sRGB and Adobe RGB, etc.; thus the present invention may be easily implemented for a variety of monitors. Display primaries (RGB) and secondaries (CMY) are known. Similarly, printer primaries and secondaries are known. One aspect of the present invention establishes a relationship within a printer (B2Ax) profile that anticipates the input (A2Bx) profile and provides a mapping in an optimal manner. For example, the typical printer cannot print red 255,0,0 but instead must use a combination of magenta and yellow. However, the appropriate combination of magenta and yellow is dependent upon the output device. The desired mapping is used to create an output ICC profile (B2Ax) mapping that includes mappings for colors out of the gamut.

First, the most important color mappings (RGBCMY, etc.) are established and these mappings are then used to determine the outside the gamut properties of the ICC output transform. The inside the gamut transforms remain the same as classic rendering, except for necessary blending or smoothing needed to eliminate contours.

Another aspect of the present invention is to make run-time changes to the printer profile to map the image input primaries to optimal output primaries. The input-output mapping strategy instructions are printer specific and can be included in a printer profile private tag.

Display primaries (RGB) are known for any input profile. This is tag information and can be easily calculated. The mapping strategy of input to printer can be experimentally determined and specified for any specific printer and mode (perceptual, saturation, colorimetric). The relationship between display and printer primaries are therefore established and can be used to change the output ICC profile (B2Ax).

As can be appreciated, a very large monitor profile (e.g. "Big RGB") will have a different mapping than that of a small monitor profile such as sRGB. By making the mapping between the monitor and the printer dependent upon knowledge of the specific input profile, consistent and optimal color output can be obtained.

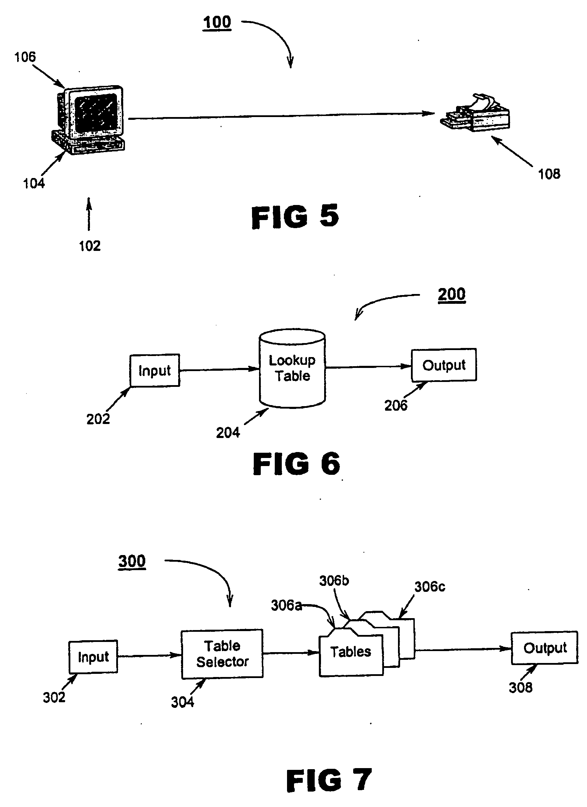

Referring now to FIG 5 there is shown a typical system 100, wherein an image input device 102, as shown in this embodiment a computer 104 with a central processing unit and memory, and a display monitor 106. The image input device 102 can also be any device capable of producing or receiving images such as a scanner or digital camera.

Referring to FIG 6 there is shown a block diagram illustrating an embodiment 200 contemplated by the present invention. An image is received by the printer at input 202. The image comprises colors that are within and outside of the image output device's gamut. The image is then processed using lookup table 204 wherein the colors are converted or mapped to the output device's colors, creating an output 206.

Referring now to FIG 7 there is shown a block diagram of an alternative example embodiment 300 of the present invention. An image with colors inside and outside the printer's gamut input is received at 302. A table selector then determines the image's input source and selects the appropriate transformation tables 306a, 306b and 306c. The image is then converted to the output as shown at 308.

The embodiments 200 and 300 above describe the image transformation process as occurring at the printer, however, the image transformation may occur prior to reaching the printer. For example, a printer driver at the image input device 102 may perform the transformation prior to sending the print job to the printer. The image transformation may occur at a location remote from both the image input device 102 and the printer 108. For example, in a networked environment a separate controller or processor may be used for handling print jobs to printer 108.

While the detailed description hereinabove describes the interaction between monitors and printers, as those skilled in the art can readily appreciate the concepts of the present invention are applicable to other image input devices including but not limited to digital cameras and scanners and other image output devices including but not limited to copiers and facsimile machines.

The present invention is also directed to various methods of halftoning for artifact reduction. Artifact reduction may be accomplished by dispersing the growth of sub-cells so that the sub-cells do not grow in the same manner and are constrained by super-cell boundaries. One method is by growing sub-cells based on a random value for each super-cell. Another method is growing sub-cells based on random patterns, preferably in a manner such that adjacent super-cells have different patterns. Another method is to disperse the growth of sub-cells are grouped wherein the groupings are not constrained by super-cell boundaries.

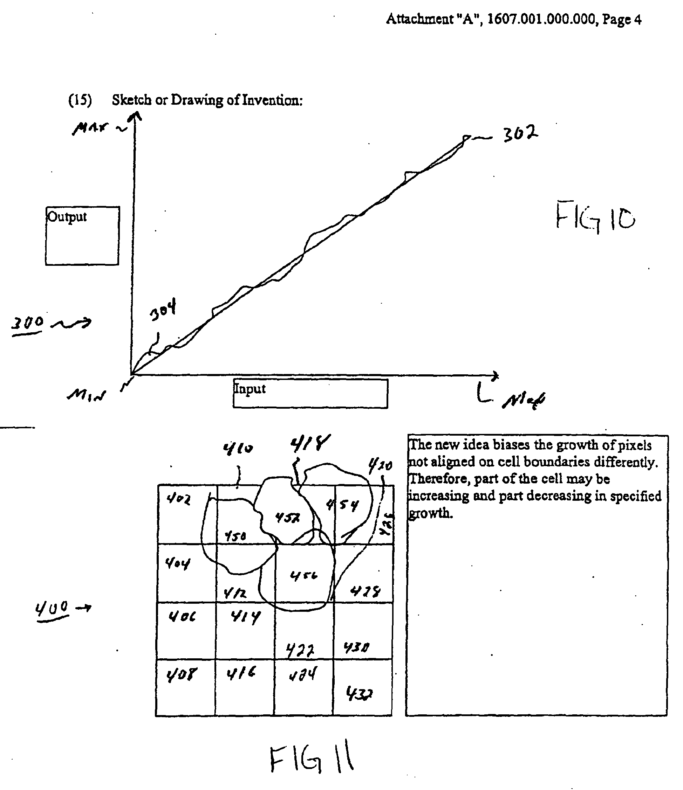

Referring to FIG 10 there is shown a graph illustrating the relationship of the input to an image output device to the output. The bottom left of the graph represent minimum input and output, which would typically be the case where no ink or media is used and the output is just plain paper. The right side of the input axis is the maximum input, or typically complete black input and the maximum output is the upper end of the axis for the output. Line 302 is the case where the input is mapped perfectly to the output. However, line 304 illustrates a randomized growth pattern for the system described in this invention. As can be seen by 304, the growth is, at some places, slower than that of line 302 and at other places, faster. Other irregular growth patterns similar to 304 can be implemented for other sub-cells.

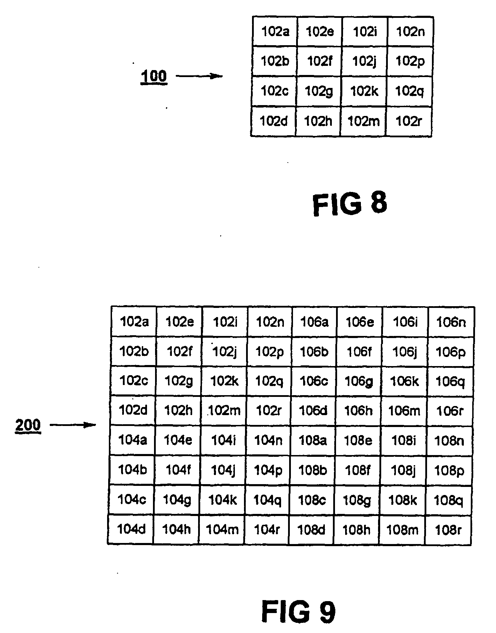

Referring to FIG 8, there is shown a super-cell 100 that is comprised of sixteen sub-cells, 102a, 102b, 102c, 102d, 102e, 102f, 102g, 102h, 102i, 102j, 102k, 102m, 102n, 102p, 102q and 102r. While the illustrations in this application use super-cells of 16 sub-cells, as those skilled in the art can readily appreciate the super-cells may comprise any number of sub-cells, which ordinarily would be an integer multiple of 16 such as 16, 64, 128 or 256 sub-cells per super-cell. The methods described herein for the 16 sub-cell super-cell are easily adaptable to other size super-cells.

Halftones are produced by biasing a certain number of sub-cells of the super-cell. For example for a 50 percent halftone, eight of the sixteen sub-cells may be biased. The eight sub-cells may be the top half of the super-cell, e.g. sub-cells 102a, 102e, 102i, 102n, 102b, 102f, 102j and 102p, the bottom half of the super-cell, e.g. sub-cells 102c, 102g, 102k, 102q, 102d, 102h, 102m and 102r, the left-half of the super-cell, e.g. 102a, 102b, 102c, 102d, 102e, 102f, 102g and 102h, the right-half of the super-cell, e.g. 102i, 102j, 102k, 102m, 102n, 102p, 102q and 102r, alternate rows of the super-cell, e.g. cells 102a, 102e, 102i, 102h, 102c, 102g, 102k and 102q or alternate columns of the super-cell, e.g. cells 102a, 102b, 102c, 102d, 102i, 102j, 102k and 102m. One method contemplated by use with the present invention is to use random sub-cells of the super-cell, for example for a 50% halftone sub-cells 102a, 102c, 102f, 102h, 102k, 102j, and 102n and 102r could be used. Another method contemplated by the present invention is to use a pattern for the super-cell such as a square wave, thus for a 50% halftone sub-cells 102d, 102c, 102b, 102a, 102e, 102i, 102j and 102k may be biased.

Referring now to FIG 9 there is shown a grid 200 of four super-cells 200. The first super-cell is comprised of sub-cells, 102a, 102b, 102c, 102d, 102e, 102f, 102g, 102h, 102i, 102j, 102k, 102m, 102n, 102p, 102q and 102r. The second super-cell is comprised of sub-cells, 104a, 104b, 104c, 104d, 104e, 104f, 104g, 104h, 104i, 104j, 104k, 104m, 104n, 104p, 104q and 104r. The third super-cell comprises sub-cells 106a, 106b, 106c, 106d, 106e, 106f, 106g, 106h, 106i, 106j, 106k, 106m, 106n, 106p, 106q and 106r. The fourth super-cell comprises sub-cells 108a, 108b, 108c, 108d, 108e, 108f, 108g, 108h, 108i, 108j, 108k, 108m, 108n, 108p, 108q and 108r.

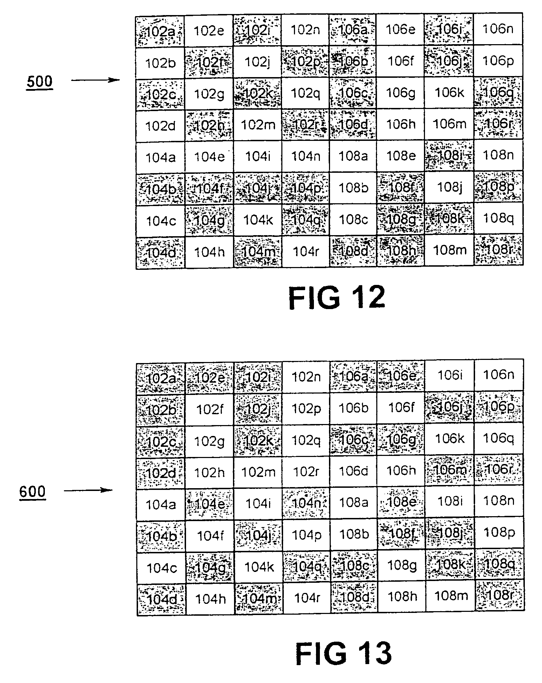

Referring now to FIG 12, there is illustrated an example of one method of the present invention. For this example, it is desired that the halftoning is 50%. One embodiment of the present invention contemplates using random patterns to obtain the 50% halftone wherein each super-cell has 50% of its sub-cells biased. For example, in FIG 5, sub-cells 102a, 102c, 102f, 102h, 102i, 102k, 102p and 102r of the first super-cell are biased. For the second super-cell, sub-cells 104b, 104d, 104f, 104g, 104j, 104m, 104p and 104q are biased. For the third super-cell, sub-cells 106a, 106b, 106c, 106d, 106i, 106j, 106q and 106r are biased. For the fourth super-cell, sub-cells 108d, 108f, 108g, 108h, 108i, 108k, 108p and 108r are biased. For this particular embodiment, each super-cell has 50% of the sub-cells biased. Preferably for each super-cell, the adjacent super-cells have different random sub-cells biased.

Randomization can be further enhanced by causing each sub-cell to grow in a different pattern. For example, one sub-cell can grow as a cluster dot, another can grow as an elliptical dot, etc.

Referring now to FIG 13 there is yet another example embodiment of the present invention. This embodiment uses a combination of random sub-cell biasing along with a random number of sub-cells per super-cell. In this example, a 50% halftone is desired. The first super-cell has nine sub-cells biased, 102a, 102b, 102c, 102d, 1022i, 102j, 102k, 102m and 102q. The second super-cell has seven sub-cells biased, 104e, 104f, 104g, 104h, 104p, 104q, 104r. The third super-cell has only four sub-cells biased, 106b, 106f, 106j and 106p, while the fourth super-cell has twelve sub-cells biased, 108a, 108b, 108c, 108e, 108f, 108g, 108i, 108j, 108k, 108n, 108p and 108q. While none of the super-cells have a 50% halftone, the aggregate of all four super-cells is that all 50% of the sub-cells are biased. Furthermore the first and second super-cells use a vertical pattern whereas the third and fourth super-cell are using a horizontal pattern.

Referring now to FIG 11 there is illustrated another embodiment of the present invention. In this embodiment, the grid 400 comprises super-cells 402, 404, 406, 408, 410, 412, 414, 416, 418, 420, 422, 424, 426, 428, 430 and 432. In this embodiment, the growth of pixels are not aligned on cell boundaries. For example a first grouping of sub-cells 450 has sub-cells from super-cell 402, 410, 404 and 412. The second grouping of sub-cells 452 has sub-cells from super-cells 410, 418 and other super-cells off the grid 400. The third grouping of sub-cells 454 has sub-cells from super-cells 418, 430 and other super-cells off the grid 400. A fourth grouping of sub-cells 456 has sub-cells from super-cells 412, 414, 420 and 422. It is further contemplated that the groupings 450, 452, 454 and 456 may be of varying sizes or numbers of super-cells as well as varying shapes.

The foregoing description of a preferred embodiment of the invention has been presented for purposes of illustration and description. It is not intended to be exhaustive or to limit the invention to the precise form disclosed. Obvious modifications or variations are possible in light of the above teachings. The embodiment was chosen and described to provide the best illustration of the principles of the invention and its practical application to thereby enable one of the ordinary skill in the art to utilize the invention in various embodiments and with various modifications as are suited to the particular use contemplated. All such modifications and variations are within the scope of the invention as determined by the appended claims when interpreted in accordance to the breadth to which they are fairly, legally and equitably entitled.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A method for calibrating a color image output device having an image output engine, comprising the steps of:
outputting (202) a predetermined image;
selecting (208) a bias color; and
adjusting (212) the color image output device based on the bias color.

2. The method of claim 1 further comprising selecting (210) a bias intensity.

3. The method of claim 1 or 2 further comprising generating a reference (102), the reference comprising a plurality of bias colors.

4. The method of claim 3 wherein the reference (102) further comprises a plurality of intensity levels.

5. The method of claim 3 or 4 further comprising visually comparing (204) the predetermined image with the reference (102).

6. The method of one of claims 1 to 5 wherein commands for performing the method are input via a control panel interface on the image output device, and/or via a remote computer communicatively coupled to the image output device.

7. The method of one of claims 1 to 6 wherein the bias color is selected from the group consisting of yellow, green, red, magenta, violet, blue, blue-green, and green.

8. The method of claim 7 wherein the image output device comprises means for outputting the colors cyan, magenta, yellow and black to create an output color, the adjusting step further comprising mapping the bias color to the output color by adjusting at least one of the output colors.

9. The method of one of claims 1 to 8 wherein the predetermined image appears as a black and white image when the colors are balanced.

10. The method of one of claims 1 to 9, the color image output device being a color printer, the method comprising at least the steps of claims 1, 3, 5 and the steps of:
generating an interface for receiving commands;
receiving a bias color selection;
wherein the bias color selection is one of the plurality of colors from the color reference.

11. An color image output device comprising:
means adapted to generate an interface for receiving commands;
means adapted to output a predetermined image;
means adapted to receive a bias color selection from a predetermined group of colors; and
means adapted to adjust the color image output device based on the bias color and the bias intensity.

12. The device of claim 12 wherein the means adapted to receive the bias color selection further comprises means adapted to receive a bias intensity from a group predetermined levels of intensities.

13. The device of claim 12 wherein the interface is a control panel interface on the color image output device, and/or the interface is implemented by a printer driver on a remote computer communicatively coupled to the color image output device.

14. The device of claim 15 wherein the color reference is displayed on a monitor coupled to the remote computer.

15. A method for determining that an image output device is in an acceptable density range, the image output device having an image output engine, comprising the steps of:
outputting (202; 402) a predetermined image;
visually comparing (204; 404) the predetermined image with a reference (102; 300);
selecting (208; 408) an adjustment parameter; and
adjusting (212; 410, 412) the image output engine based on the adjustment parameter.

16. The method of claim 15 wherein the reference and/or the predetermined image comprises a plurality of images.

17. The method of claim 16 wherein the plurality of images has one image with at least one of a light background and a dark background.

18. The method of claim 16 or 17, wherein each image comprises a different background.

19. The method of claim 17 wherein the image with a light background is the same image as the image with the dark background.

20. The method of one of claims 16 to 19 wherein the predetermined image comprises a first image outputted with a light background and a first image with a dark background.

21. The method of claim 20 further comprising visually comparing the predetermined image with the reference by determining whether any details are missing from the first image with a light background and the first image with a dark background.

22. The method of one of claims 15 to 21 wherein commands for performing the method are input via a control panel interface on the image output device, and/or via a remote computer communicatively coupled to the image output device.

23. The method of one of claims 15 to 22 wherein the adjustment parameter is selected from the group consisting of lighten, darken and no adjustment.

24. A image output apparatus, comprising
means adapted to output a predetermined image;
means adapted to select an adjustment parameter; and
means adapted to adjust the image output engine based on the adjustment parameter;
wherein the adjustment parameter is selected by a user comparing the predetermined image with a reference image.

25. The image output apparatus of claim 24 further comprising an interface wherein commands are input via a control panel interface.

26. The image output apparatus of claim 24 or 25 wherein the adjustment means is adapted to allow that the adjustment parameter is selected from the group consisting of lighten, darken and no adjustment.

27. A computer program including computer program logic which, when run on a correspondingly programmed output device / apparatus, implements a method according to one of claims 1 to 10 or 15 to 23.

28. A method for printing colors outside the gamut of an image output device, comprising the steps of:
experimentally determining a relationship between an input primary and an output primary;
mapping the input primary to an output primary;
mapping an output of gamut primary to a placement of desired printer primaries.

29. The method of claim 28 further comprising combining the mapping of the out of gamut primary with an inside the gamut profile.

30. The method of claim 28 or 29 further comprising creating a transformation table, the transformation table comprising an inside the gamut profile and the mapping an output of gamut primary to a placement of desired printer primaries.

31. The method of claim 30, the steps further comprising:
receiving an image input from an image input device, the image comprising colors inside the gamut and outside the gamut; and
converting the image colors to output colors via the transformation table.

32. The method of claim 30 wherein a plurality of transformation tables are created, each transformation table is mapped to an image input profile.

33. The method of claim 32, the steps further comprising:
receiving an image input from an image input device, the image comprising colors inside the gamut and outside the gamut;
determining a profile for the image input;
selecting one of the plurality of transformation tables that matches the profile; and
converting the image colors to output colors via the transformation table.

34. The method of one of claims 28 to 33 wherein the image output device has a mode selected from the group consisting of perceptual, saturation and colorimetric.

35. An apparatus for mapping an image input profile to an image output device, comprising:
means adapted to experimentally determine a relationship between an input primary and an output primary;
means adapted to map the input primary to an output primary;
means adapted to map an output of gamut primary to a placement of desired printer primaries.

36. The apparatus of claim 35 further comprising means adapted to combine the mapping of the out of gamut primary with an inside the gamut profile.

37. The apparatus of claim 35 or 36 further comprising means adapted to create a transformation table, the transformation table comprising an inside the gamut profile and the mapping an out of gamut primary to a placement of desired printer primaries.

38. The apparatus of claim 37 further comprising:
means adapted to receive an image input from an image input device, the image comprising colors inside the gamut and outside the gamut; and
means adapted to converting the image colors to output colors via the transformation table.

39. The apparatus of claim 37 wherein a plurality of transformation tables are created, each transformation table is mapped to an image input profile.

40. The apparatus of claim 39 further comprising:
means adapted to receive an image input from an image input device, the image comprising colors inside the gamut and outside the gamut;
means adapted to determine a profile for the image input;
means adapted to select one of the plurality of transformation tables that matches the profile; and
means adapted to convert the image colors to output colors via the transformation table.

41. An image output apparatus, comprising:
means adapted to communicate with a transformation table, the transformation table comprising means adapted tomap an input primary to an output primary and means adapted to map an out of gamut primary to a placement of desired printer primaries;
means for receiving an image comprising a plurality of colors from an image input device;
wherein an output image is created by transforming the plurality of colors from the input image device via the transformation table and at least one of the plurality of colors is outside the image output device's gamut.

42. The apparatus of claim 41 wherein the image input device is selected from the group consisting of a monitor, a scanner, and a digital camera.

43. The apparatus of claim 41 or 42 wherein the means to communicate comprises means to communicate to a plurality of transformation tables, further comprising:
means adapted to determine an input profile; and
means adapted to select an appropriate transformation table from the transformation table based on the input profile.

44. A method of Halftone Super-cell optimization for artifact reduction, comprising the steps of:
receiving a halftone value;
selecting a group of super-cells, each super-cell having a plurality of sub-cells;
randomly selecting a code-value for each super-cell; and
biasing the sub-cells of each super-cell based on its randomly selected code-value;
wherein the total of the randomly selected code-value for the group of super-cells equals the halftone value.

45. The method of claim 44 wherein each super-cell has sub-cells growing in a pre-determined but different manner.

46. The method of claim 44 or 45 wherein the number of sub-cells per super-cell is selected from group consisting of 16, 64, and 128.

47. The method of claim 50 wherein the total of the randomly selected code-value for the group of super-cells is based on the average value of all the super-cells.

48. The method of one of claims 44 to 47 wherein each super-cell has a different number of randomly selected sub-cells than all adjacent super-cells.

49. A method of Halftone Super-cell optimization for artifact reduction, comprising the steps of:
receiving a halftone value;
selecting a group of super-cells, each super-cell having a plurality of sub-cells;
using a pattern to select sub-cells from each super-cell; and
biasing the selected group of sub-cells;
wherein the total of the selected group of sub-cells for the group of super-cells equals the halftone value.

50. The method of claim 49 wherein each super-cell has a different pattern for selecting sub-cells than all adjacent super-cells.

51. The method of claim 49 or 50 wherein the number of sub-cells per super-cell is selected from group consisting of 16, 64, and 128.

52. The method of one of claims 49 to 51 wherein the pattern is selected from the group consisting of a square wave, a sine wave, a crossing pattern, a vertical pattern and a horizontal pattern..

53. A method of Halftone Super-cell optimization for artifact reduction, comprising the steps of:
receiving a halftone value;
selecting a group of super-cells, each super-cell having a plurality of sub-cells;
grouping sub-cells such that at least one group of sub-cells contains cells from at least two super-cells;
randomly selecting sub-cells based on a code value for each super-cell; and
biasing each grouping of sub-cells based on its randomly selected code-value;
wherein the total of the selected group of sub-cells for the group of super-cells equals the halftone value.

54. The method of claim 53 wherein each grouping of sub-cells has a different code-value than all adjacent groupings of super-cells.

55. The method of claim 53 or 54, wherein each grouping of sub-cells has a different number of randomly selected sub-cells than all adjacent groupings of super-cells.

56. The method of claim 53 or 54 wherein the randomly selected group of sub-cells are selected based on a predetermined pattern.

57. The method of claim 56 wherein the overall pattern of growth within a group of sub-cells can differ in each individual sub-cell.

58. The method of claim 56, wherein the predetermined pattern for each grouping of sub-cells is selected from the group consisting of a square wave and a sine wave.

59. An image output apparatus, comprising:
means adapted to receive a halftone value;
means adapted to select a group of super-cells, each super-cell having a plurality of sub-cells; and
means adapted to bias sub-cells;
the image output apparatus comprising means adapted to perform the steps of a method according to one of claims 44 to 58.

60. The apparatus of claim 59, comprising means adapted to randomly select a code-value for each super-cell.

61. The apparatus of claim 59, comprising:
means adapted to use a pattern to select sub-cells from each super-cell.

62. The apparatus of claim 59, comprising:
means adapted to group sub-cells such that at least one group of sub-cells contains cells from at least two super-cells; and
means adapted to randomly select a group of sub-cells from each grouping of sub-cells.

63. A computer program including computer program logic which, when run on a correspondingly programmed output device / apparatus, implements a method according to one of claims 28 to 34 or 44 to 58.

## Amended claims

### Amended claims in accordance with Rule 86(2) EPC.

**1.** A method for calibrating a color image output device having an image output engine, comprising the steps of:
outputting (202) a predetermined image;
selecting (208) a bias color to indicate the color of a tint or hue appearing on the predetermined image; and
adjusting (212) the color image output device based on the bias color.

**2.** The method of claim 1 further comprising selecting (210) a bias intensity.

**3.** The method of claim 1 or 2 further comprising generating a reference (102), the reference comprising a plurality of bias colors.

**4.** The method of claim 3 wherein the reference (102) further comprises a plurality of intensity levels.

**5.** The method of claim 3 or 4 further comprising visually comparing (204) the predetermined image with the reference (102).

**6.** The method of one of claims 1 to 5 wherein commands for performing the method are input via a control panel interface on the image output device, and/or via a remote computer communicatively coupled to the image output device.

**7.** The method of one of claims 1 to 6 wherein the bias color is selected from the group consisting of yellow, orange, red, magenta, violet, blue, blue-green, and green.

**8.** The method of one of claims 1 to 7, the color image output device being a color printer, the method comprising at least the steps of claims 1, 3, 5 and the steps of:
generating an interface for receiving commands;
receiving a bias color selection;
wherein the bias color selection is one of the plurality of colors from the color reference.

**9.** The method of any of claims 1 to 8, the method comprising at least the steps of claims 3 and 5, and further comprising the steps of:
selecting (208; 408) an adjustment parameter; and
adjusting (212; 410, 412) the image output engine based on the adjustment parameter.

**10.** The method of claim 9 wherein the reference and/or the predetermined image comprises a plurality of images.

**11.** The method of claim 10 wherein the plurality of images has one image with at least one of a light background and a dark background.

**12.** The method of claim 10 or 11, wherein each image comprises a different background.

**13.** The method of claim 11 wherein the image with a light background is the same image as the image with the dark background.

**14.** The method of one of claims 10 to 13 wherein the predetermined image comprises a first image outputted with a light background and a first image with a dark background.

**15.** The method of claim 14 further comprising visually comparing the predetermined image with the reference by determining whether any details visible in the reference are missing from the first image with a light background and the first image with a dark background.

**16.** The method of one of claims 9 to 15 wherein commands for performing the method are input via a control panel interface on the image output device, and/or via a remote computer communicatively coupled to the image output device.

**17.** The method of one of claims 9 to 16 wherein the adjustment parameter is selected from the group consisting of lighten, darken and no adjustment.

**18.** A color image output device comprising:
means adapted to generate an interface for receiving commands;
means adapted to output a predetermined image;
means adapted to receive a bias color selection from a predetermined group of colors, the bias color indicating the color of a tint or hue appearing on the pretermined image; and
means adapted to adjust the color image output device based on the bias color.

**19.** The device of claim 18 wherein the means adapted to receive the bias color selection further comprises means adapted to receive a bias intensity from a group of predetermined levels of intensities, and wherein the adjusting means are further adapted to adjust the color image output device based on the bias intensity.

**20.** The device of claim 18 or 19 wherein the interface is a control panel interface on the color image output device, and/or the interface is implemented by a printer driver on a remote computer communicatively coupled to the color image output device.

**21.** The device of claim 20 wherein the color reference is displayed on a monitor coupled to the remote computer.

**22.** The image output apparatus of any of claims 18 to 21, further comprising means adapted to select an adjustment parameter; and
means adapted to adjust the image output engine based on the adjustment parameter;
wherein the adjustment parameter is selected by a user comparing the predetermined image with a reference image.

**23.** The image output apparatus of claim 22 wherein commands are input via a control panel interface.

**24.** The image output apparatus of claim 22 or 23 wherein the adjustment means is adapted to allow that the adjustment parameter is selected from the group consisting of lighten, darken and no adjustment.

**25.** A computer program including computer program logic which, when run on a correspondingly programmed output device / apparatus, implements a method according to one of claims 1 to 17.
